# EUROPEAN PATENT APPLICATION

(11) **EP 1 657 714 A2**
(43) Date of publication of application: **17.05.2006**
(21) Application number: 05024923.4
(22) Date of filing: 15.11.2005
(51) Int. Cl.: G11B 7/085, G11B 7/0037, G11B 7/26

(54) **Method for performing servo control for blank discs**

(30) Priority: 16.11.2004 KR 2004093328
(71) Applicant: Hitachi-LG Data Storage Korea Inc., Seoul 150-010 (KR)
(72) Inventor: Kim, Joung Woo, Suwon-si Kyunggi-do, 441-390 (KR)
(74) Representative: Wagner, Bernhard Peter

(57) **Abstract**

A servo control method for blank discs is provided. When an optical disc is loaded, servo control suitable for the type of the loaded disc is performed. When the optical disc is a blank disc, data of a specific size is recorded in a predetermined area of the optical disc and servo control is performed again based on a playback characteristic (for example, a playback RF signal level) of the recorded data. Thus, fine servo control is performed for the blank disc based on the playback RF signal so that an accurate and stable servo operation is achieved and thus an optimal recording power can be detected, thereby improving the recording quality of the optical disc.

## Description

### BACKGROUND OF THE INVENTION

### Field of the Invention

The present invention relates to a method for performing servo control for blank discs, and more particularly to a servo control method which performs optimal servo control for a blank disc based on a playback RF signal.

### Description of the Related Art

General optical disc devices carry out preset servo control when an optical disc is inserted.

Specifically, the optical disc device determines whether the kind of the inserted optical disc is CD or DVD and whether the type of the inserted optical disc is read-only (ROM), recordable (+/-R), or rewritable (+/-RW or RAM). After normal servo control is performed for laser power, tracking servo type, servo gain, etc., so as to be suitable for the determined type, servo gain, offset, tilt, defocus, etc., are finely controlled (or adjusted) based on a playback RF signal detected when reading data recorded at a specific position of the optical disc.

When the optical disc is a blank disc on which no data has been recorded, the type of the disc is determined based on a tracking error signal and/or a focusing error signal, and, after normal servo control is performed so as to be suitable for the determined type (recordable or rewritable), fine servo control for servo gain, offset, tilt, defocus, etc., is performed using only the tracking error signal. However, this servo control based on the tracking error signal may become unstable compared to the servo control based on the playback RF signal. Particularly, tile or defocus in the servo control based on the tracking error may vary from that in the servo control based on the playback RF signal. In addition, if Optimal Power Calibration (OPC) is performed after the servo control is performed based on the tracking error signal rather than the playback RF signal, an optimal recording power cannot be detected.

### SUMMARY OF THE INVENTION

Therefore, the present invention has been made in view of the above problems, and it is an object of the present invention to provide a servo control method which can perform accurate and stable servo control for blank discs.

In accordance with one aspect of the present invention, the above and other objects can be accomplished by the provision of a method for performing servo control for blank discs, the method comprising performing servo control suitable for a type of a loaded optical disc; recording data of a specific size in a predetermined area of the optical disc when the optical disc is a blank disc; and again performing servo control based on a playback characteristic of the recorded data.

Preferably, the method according to the present invention further comprises performing detection of a recording power optimal for the optical disc according to the servo control performed again.

Preferably, the predetermined area is a test zone of a Power Calibration Area (PCA) when the optical disc is a CD or DVD-R/RW, and the predetermined area is an inner peripheral test zone when the optical disc.is a DVD+R/RW. Preferably, the playback characteristic is a playback RF signal level. The servo control suitable for the type of the optical disc may be performed based on a servo control value, corresponding to the type of the optical disc, from among servo control values previously stored respectively for optical disc types.

In accordance with another aspect of the present invention, there is provided an apparatus for performing servo control for blank discs, the apparatus comprising an optical drive unit for recording data on an optical disc and playing back the data recorded on the optical disc; and a controller for controlling the optical drive unit, determining a type of an inserted optical disc, performing servo control suitable for the determined type, recording data of a specific size in a predetermined area of the optical disc when the optical disc is a blank disc, and again performing servo control based on a playback characteristic of the recorded data.

Preferably, the apparatus according to the present invention further comprises a memory for storing respective servo control values suitable for optical disc types.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram of an embodiment of an optical disc device to which a method for performing servo control for blank discs according to the present invention is applied; and
FIG. 2 is a flow chart of a preferred embodiment of the method for performing servo control for blank discs according to the present invention.

### DETAILED DESCRIPTION OF PREFFERRED EMBODIMENTS

Preferred embodiments of a method for performing servo control for blank discs according to the present invention will now be described with reference to the accompanying drawings.

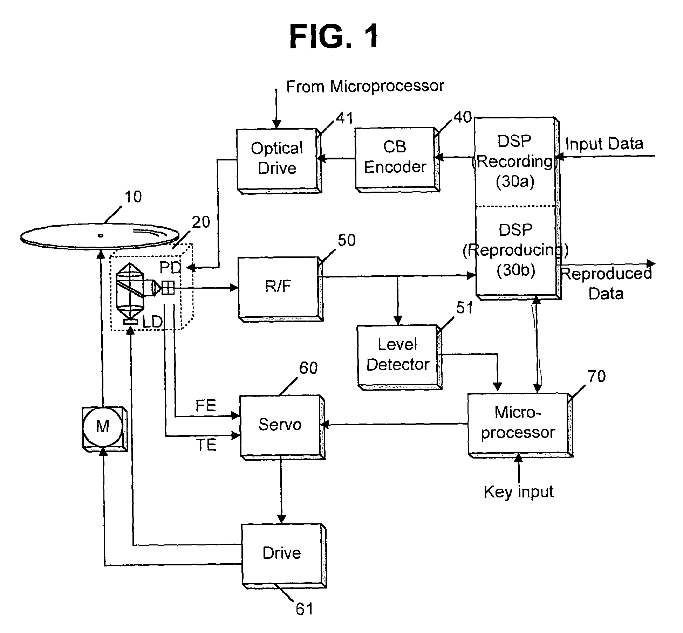

FIG. 1 is a block diagram of an embodiment of an optical disc device to which a method for performing servo control for blank discs according to the present invention is applied. The optical disc device comprises an optical pickup 20, a digital recording signal processor 30a, a digital playback signal processor 30b, a channel bit encoder 40, an optical drive 41, an R/F unit 50, a servo unit 60, a drive unit 61, and a microcomputer 70. The digital recording signal processor 30a adds an error correction code (ECC) or the like to input digital data to convert it to a recording format. The channel bit encoder 40 then converts the data in recording format to a bitstream. The optical drive 41 outputs a drive signal according to a signal received from the channel bit encoder 40. The optical pickup 20 records data according to the drive signal on an inserted optical disc 10 and also detects a signal from a recording surface of the optical disc 10. The R/F unit 50 performs filtering and wave shaping on a signal detected by the optical pickup 20 to output a binary signal. The signal level detector 51 detects a signal level (or a peak level) of a high frequency playback (RF) signal output from the R/F unit 50. The digital playback signal processor 30b restores original data from the binary signal using its internal clock which has been brought into phase with the binary signal. The drive unit 61 drives the optical pickup 20 and a spindle motor M which rotates the optical disc. The servo unit 60 controls the operation of the drive unit 61 based on the rotational speed of the optical disc 10 and Tracking Error (TE) and Focusing Error (FE) signals of the optical pickup 20. If the inserted optical disc 10 is a blank disc, the microcomputer 70 records specific data in a predetermined area of the optical disc 10 and performs servo control based on a signal detected from the recorded data.

In the above optical disc device, respective servo control values of optical disc types are stored in an internal memory of the microcomputer 70.

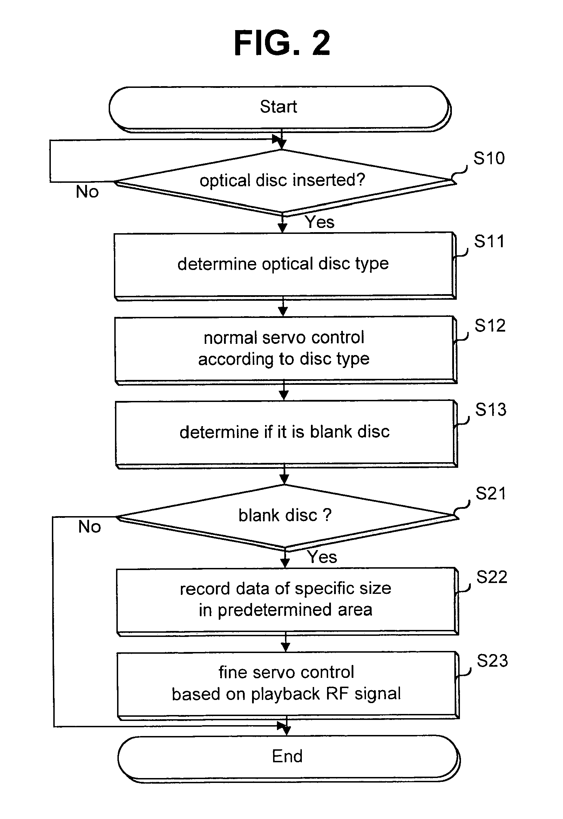

FIG. 2 is a flow chart of a preferred embodiment of a method for performing servo control for blank discs according to the present invention. The servo control method of FIG. 2 will now be described in detail with reference to the optical disc device of FIG. 1.

When an optical disc 10 is inserted (S10), first, the microcomputer 70 determines the type of the optical disc 10 (S11). Specifically, based on the level of a focusing error signal or based on a tracking error signal (or based on whether or not a wobble signal is detected), the microcomputer 70 determines whether the kind of the optical disc is CD or DVD and whether the type of the optical disc is read-only (ROM), recordable (+/-R), or rewritable (+/-RW or RAM).

When the type of the optical disc 10 is determined, the microcomputer 70 performs normal servo control based on a servo control value corresponding to the determined type from among the respective servo control values of optical disc types stored in the internal memory (S12).

After performing the normal servo control in this manner, the microcomputer 70 moves the optical pickup 20 to a Programmable Memory Area (PMA) of the optical disc 10 when the optical disc 10 is a CD. Based on whether or not data has been recorded in the PMA, the microcomputer 70 determines whether or not the optical disc 10 is a blank disc (S13). When the optical disc 10 is a DVD, the microcomputer 70 determines whether or not the optical disc 10 is a blank disc, based on whether or not data has been recorded in a Recording Management Area (RMA) or a lead-in area of the optical disc 10.

When the optical disc 10 is determined to be a blank disc (S20), the microcomputer 70 determines that proper servo control is not performed since no data has been recorded on the optical disc 10, and carries out fine servo control of the blank disc, which is described below in detail.

When the optical disc 10 is a blank disc, the microcomputer 70 moves the optical pickup 20 to a predetermined area of the optical disc 10, and then records data of a specific size in the predetermined area (S21). When the optical disc 10 is a CD or DVD-R/RW, the predetermined area may be a test zone of a Power Calibration Area (PCA). When the optical disc 10 is a DVD+R/RW, the predetermined area may be an inner peripheral test zone of the disc.

When the recording of the data in the predetermined area is completed, the microcomputer 70 performs fine servo control for servo gain, offset, tilt, defocus, etc., based on a playback RF signal detected during playback of the recorded data (S22). The fine servo control can be performed based on the level of a playback RF signal detected by the signal level detector 51.

After performing the fine servo control, the microcomputer 70 performs a requested operation on the optical disc 10. When a recording operation is requested, the microcomputer 70 detects an optimal recording power through Optical Power Calibration (OPC) using the test zone of the PCA of the optical disc 10, and performs the requested recording operation with the detected optimal recording power. The OPC is performed with a finely adjusted servo control value so that it is possible to detect a more accurate recording power, thereby improving the recording quality of the optical disc 10.

As is apparent from the above description, a servo control method according to the present invention allows an accurate and stable servo operation for blank discs, and thus allows detection of an optimal recording power, thereby improving the recording quality.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for performing servo control for blank discs, the method comprising:
- performing servo control suitable for a type of a loaded optical disc;
- recording data of a specific size in a predetermined area of the optical disc when the optical disc is a blank disc; and
- again performing servo control based on a playback characteristic of the recorded data.

2. The method according to claim 1, wherein the predetermined area is a test zone of a Power Calibration Area (PCA) when the optical disc is a CD or DVD-R/RW.

3. The method according to claim 1, wherein the predetermined area is an inner peripheral test zone when the optical disc is a DVD+R/RW.

4. The method according to claim 1, wherein the playback characteristic is a playback RF signal level.

5. The method according to claim 1, wherein the servo control suitable for the type of the optical disc is performed based on a servo control value, corresponding to the type of the optical disc, from among servo control values previously stored respectively for optical disc types.

6. The method according to claim 1, further comprising:
performing detection of a recording power optimal for the optical disc according to the servo control performed again.

7. An apparatus for performing servo control for blank discs, the apparatus comprising:
- an optical drive unit for recording data on an optical disc and playing back the data recorded on the optical disc; and
- a controller for controlling the optical drive unit, determining a type of an inserted optical disc, performing servo control suitable for the determined type, recording data of a specific size in a predetermined area of the optical disc when the optical disc is a blank disc, and again performing servo control based on a playback characteristic of the recorded data.

8. The apparatus according to claim 7, wherein the predetermined area is a test zone of a Power Calibration Area (PCA) when the optical disc is a CD or DVD-R/RW, and the predetermined area is an inner peripheral test zone when the optical disc is a DVD+R/RW.

9. The apparatus according to claim 7, wherein the playback characteristic is a playback RF signal level.

10. The apparatus according to claim 7, further comprising:
a memory for storing respective servo control values suitable for optical disc types.

11. The apparatus according to claim 7, wherein the controller performs detection of a recording power optimal for the optical disc according to the servo control performed again.
